# EUROPEAN PATENT SPECIFICATION

(11) **EP 2 883 819 B1**
(45) Date of publication and mention of the grant of the patent: **19.10.2016**
(21) Application number: 13197031.1
(22) Date of filing: 12.12.2013
(51) Int. Cl.: B65G 41/00, B65G 65/28

(54) **A mobile stockpiling conveyor**
Mobiler Lagerungsförderer
Convoyeur de stockage mobile

(43) Date of publication of application: 17.06.2015
(73) Proprietor: Portafill International Limited, Omagh Tyrone BT79 9JR (GB)
(72) Inventor: Rafferty, Malachy James, Omagh, Tyrone BT79 PJR (GB)
(74) Representative: Schütte, Gearoid

(56) References cited:
- US-A- 4 813 839
- US-A- 5 515 961
- US-B2- 8 123 019

## Description

This invention relates to a mobile stockpiling conveyor according to the preamble of claim 1.

The invention particularly relates to a mobile stockpiling conveyor of the type comprising a chassis mounted on mobile support elements, such as wheels or tracks, and a conveyor mounted on a chassis. Typically a power pack is mounted on the chassis to drive at least some of the wheels or tracks and drive an hydraulic system for controlling drive motors and rams for operating and adjusting the conveyor. Conveniently a controller may be mounted on the chassis to allow remote control of the power pack and hydraulic system. In use, the conveyor can be manoeuvred into a desired position by means of the chassis. When a stockpile has been created the conveyor needs to be moved to the next stockpiling position. This may involve considerable manoeuvring of the chassis to correctly align the conveyor for the next stockpile. Also, for safety reasons, the conveyor may need to be collapsed on the chassis prior to manoeuvring and subsequently extended again when in position. Clearly this is somewhat time consuming and inconvenient.

The present invention is directed towards overcoming these problems.

US 5,515,961 discloses a portable radial stacking conveyor comprising a chassis with a conveyor mounted thereon. The chassis has transport wheels and radial travel wheels which are movable between a raised disengaged position and a lowered ground-engaging position in which the transport wheels are lifted clear of the ground to enable the conveyor to be moved through an arc about a pivot at a tail section of the conveyor for stockpiling.

### Summary of the Invention

According to the invention there is provided a mobile stockpiling conveyor, including:
a chassis mounted on primary mobile support elements, such as wheels or tracks,
a conveyor mounted on the chassis by a telescopic support strut and an associated fixed length link arm which extend outwardly at opposite sides of the chassis, both extending between the chassis and the conveyor and being pivotally connected to both the chassis and the conveyor,
a pivot mount for pivotally supporting an infeed end of the conveyor, and
secondary mobile support elements, such as wheels or tracks, which are movable between a raised disengaged position on the chassis and a lowered ground-engaging operating position in which the primary mobile support elements are lifted clear of the ground,
characterised in that a telescopic pivot adjusting link extends between the chassis and the link arm, being telescopically adjustable to pivot the link arm on the chassis.

Advantageously, in accordance with the present invention, when stockpiling the secondary mobile support elements can be lowered into an operating position which allows the conveyor to be swung through an arc about the pivot mount for building up a number of stockpiles in a simple fashion involving minimum manoeuvring of the chassis. That is, when the secondary support elements are in the operating position, they cooperate with the pivot mount for pivoting the conveyor about the pivot mount.

In one embodiment of the invention, each secondary mobile support element is rotatable about an axis of rotation which is substantially parallel to a longitudinal axis of the conveyor when in the operating position for lateral movement of the conveyor. Operation of the secondary mobile support elements in the operating position swings the conveyor laterally about the pivot mount.

In another embodiment, each secondary mobile support element is rotatable about an axis of rotation which passes through a pivot axis of the pivot mount when in the operating position.

In another embodiment, each secondary mobile support element is mounted on a pivot arm on the chassis for pivoting between a raised disengaged position and a lowered operating position, with actuating means which is operable to raise and lower the pivot arm.

In another embodiment, each pivot arm has an inner end and an outer end, said inner end being pivotally mounted on the chassis and at least one wheel being mounted at the outer end of the arm, an actuating ram being mounted between the arm and chassis which is operable to raise and lower the pivot arm.

In a further embodiment, each pivot arm is mounted on an upstanding mounting bracket on the chassis, the inner end of the pivot arm being pivotally mounted at a lower end of the mounting bracket and the ram extending between upper end of the mounting bracket and a pivot mount intermediate the inner end and an outer end of the pivot arm.

In another embodiment, at least one of said wheels is driven by an hydraulic motor.

In another embodiment, the pivot mount has a ground-engaging base with a swivel joint mounted thereon, said swivel joint connected by fixed length rods to an outer end of the link arm and being pivotally connected to the link arm and the swivel joint, and a telescopic arm extending between the swivel joint and an outer end of the pivot adjusting link and being pivotally connected to the swivel joint and the pivot adjusting link.

In a further embodiment, the conveyor comprises a plurality of folding sections.

In another embodiment, the conveyor comprises an infeed section, an intermediate section and a discharge section, each of the infeed section and the discharge section being hingedly connected to the intermediate section and foldable inwardly over the intermediate section.

In another embodiment, the intermediate conveyor section is movable on the chassis by means of the telescopic support strut and the associated link arm between a lowered stored position seated on a rest on the chassis and a raised operative position above the chassis.

In another embodiment, an outer end of the telescopic support strut is pivotally connected adjacent a discharge end of the intermediate section of the conveyor and an outer end of the link arm is pivotally connected adjacent an infeed end of the intermediate section of the conveyor.

In another embodiment, conveyor folding rams extend between the intermediate section and each of the infeed section and the discharge section of the conveyor for folding the infeed section and the discharge section on the intermediate section.

### Brief Description of the Drawings

The invention will be more clearly understood by the following description of some embodiments thereof, given by way of example only, with reference to the accompanying drawings, in which:

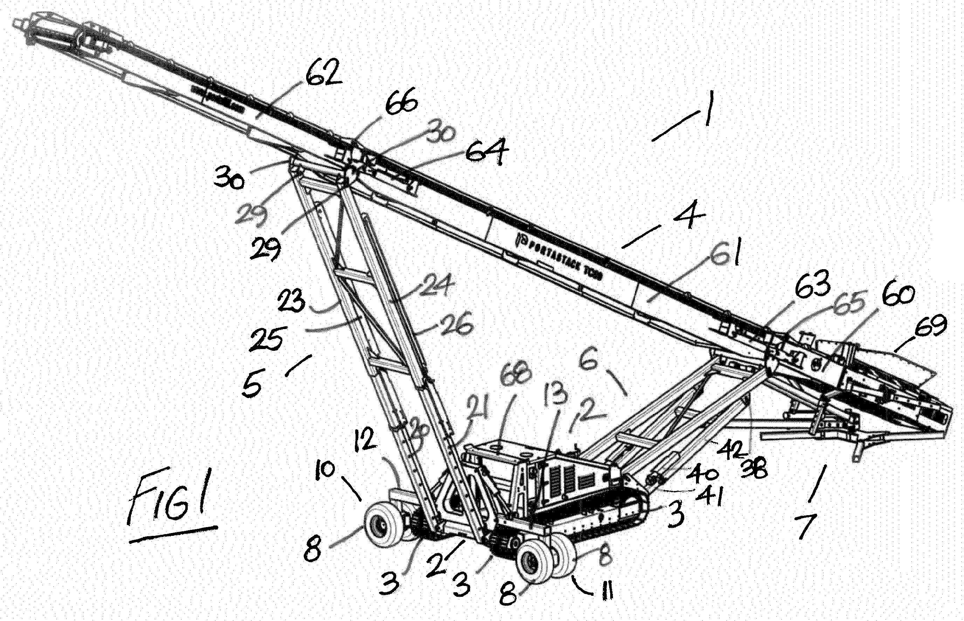

Fig. 1 is a perspective view of a mobile stockpiling conveyor according to the invention;

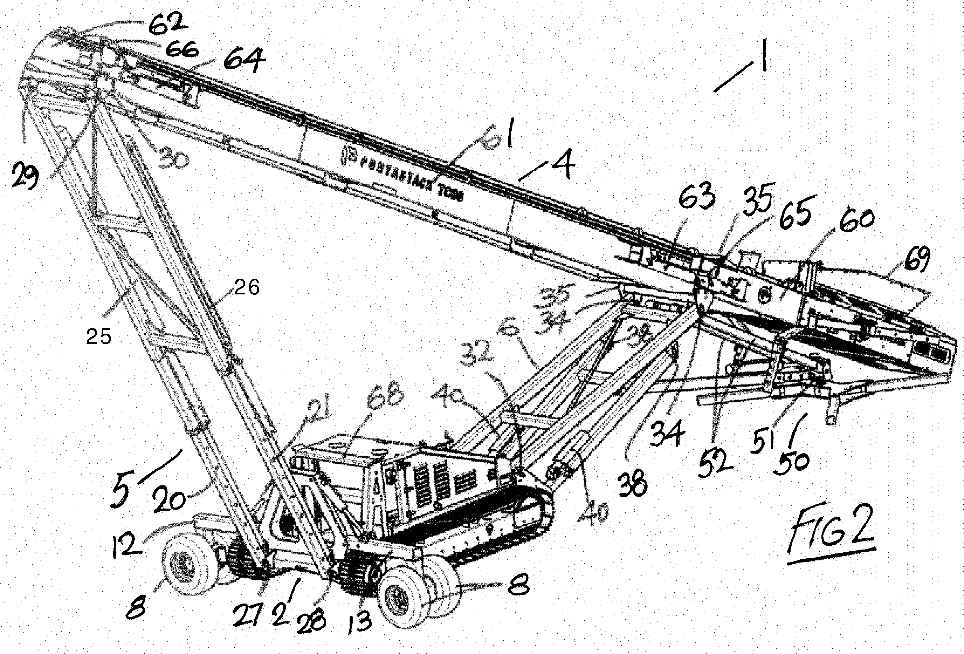

Fig. 2 is an enlarged detail perspective view showing portion of the mobile stockpiling conveyor;

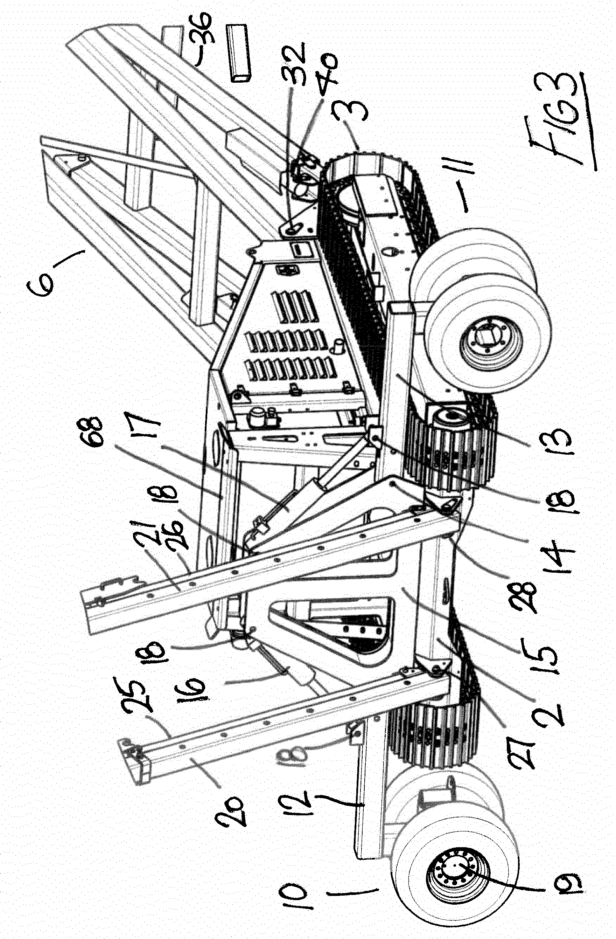

Fig. 3 is an enlarged detail perspective view showing a chassis portion of the mobile stockpiling conveyor; and

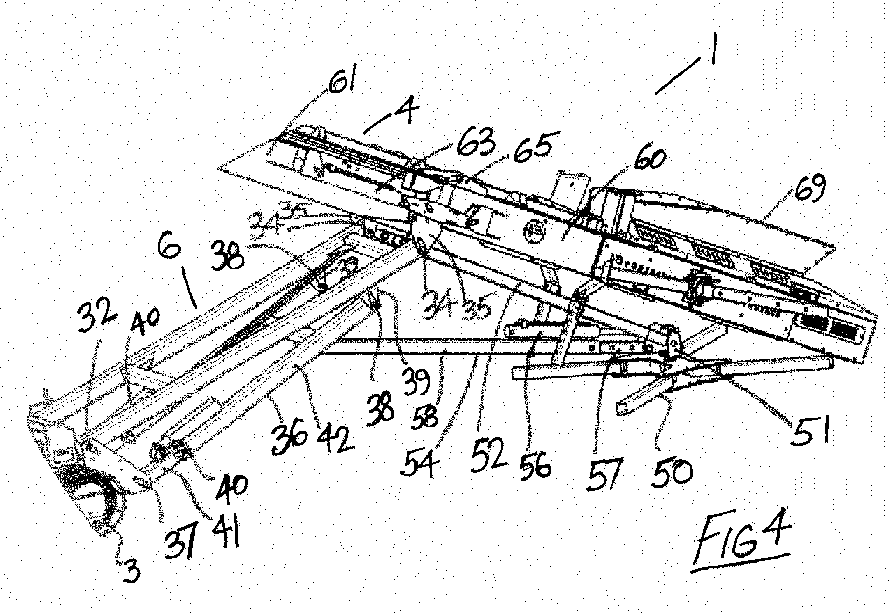

Fig. 4 is an enlarged detail perspective view showing a pivot mounting frame forming portion of the mobile stockpiling conveyor.

### Detailed Description of the Preferred Embodiments

Referring to the drawings, there is shown a mobile stockpiling conveyor according to the invention indicated generally by the reference numeral 1. The mobile stockpiling conveyor 1 has a mobile chassis 2 mounted in this case on tracks 3 forming primary mobile support elements. A conveyor 4 is mounted on the chassis 2 by a telescopic support strut 5 and an associated link arm 6. A pivot mount 7 pivotally supports an infeed end of the conveyor 4 when in use. In accordance with the invention, secondary mobile support elements, in this case auxiliary wheels 8 are mounted on the chassis 2. During normal manoeuvring of the chassis 2 these auxiliary wheels 8 are supported in a raised inoperative stored position on the chassis 2 and the chassis 2 is driven about on the tracks 3 in the usual way. However, for stockpiling the auxiliary wheels 8 can be lowered into an operative ground-engaging position as shown in the drawings, raising the tracks 3 clear of the ground. Thus, by driving the auxiliary wheels 8 when they are in the lowered position, the chassis 2 can be moved laterally to swing the conveyor 4 laterally through an arc about the pivot mount 7 to build up a series of stockpiles of material.

In more detail, the secondary mobile support elements comprise a pair of wheel sets 10, 11, each of which is mounted on an associated pivot arm 12, 13 and each having a pair of the wheels 8. Each pivot arm 12, 13 is pivotally mounted by a pivot pin 14 at its inner end to a mounting bracket 15 on the chassis 2. A ram 16, 17 extends between the mounting bracket 15 and each arm 12, 13 and is operable to raise and lower the arm 12, 13 on the chassis 2. Pivot pins 18 connect each end of each ram 16, 17 to the mounting bracket 15 and the associated arms 12, 13. An hydraulic motor 19 mounted on one of the wheel sets 10, 11 is operable to drive the associated wheels 8 on the arm 12, 13. The rotational axis of each set 10,11 of wheels 8 is substantially parallel to a longitudinal axis of the conveyor 4 for lateral movement of the conveyor 4.

The conveyor 4 comprises a number of folding sections. The conveyor 4 is supported on the chassis 2 by the telescopic support strut 5 and the associated fixed length link arm 6 which are adjustable to allow correct positioning of the conveyor 4. The support strut 5 is telescopically adjustable, having lower elements 20, 21 which are slidably received within complementary upper elements 23, 24. Rams 25, 26 are operable to extend and retract the support strut 5. A lower end of the support strut 5 is mounted by pivot pins 27, 28 on the chassis 2 and an upper end of the support strut 5 is mounted by pivot pins 29 to associated mounting brackets 30 on an underside of the conveyor 4.

The link arm 6 is pivotally mounted by pivot pins 32 at an inner end on the chassis 2 and pivotally mounted at an outer end by pivot pins 34 to associated mounting brackets 35 on an underside of the conveyor 4. A telescopic pivot adjusting link 36 is mounted below the link arm 6 and has an inner end pivotally mounted on the chassis 2 by pivot pins 37 and an outer end mounted by pivot pins 38 to mounting brackets 39 on an underside of the link arm 6. Rams 40 are operable to extend and retract telescopic inner 41 and outer 42 portions of the link 36.

The pivot mount 7 has a ground engaging base 50 carrying a swivel joint 51. The swivel joint 51 is connected by fixed length rods 52 to an outer end of the link arm 6, said rods 52 being pivotally connected to the link arm 6 and to the swivel joint 51. Also, a telescopic arm 54 extends between the swivel joint 51 and an outer end of the pivot adjusting link 36 and is pivotally connected to both the swivel joint 51 and the pivot adjusting link 36. A ram 56 is operable to telescopically adjust inner 57 and outer 58 portions of the pivot adjusting link 54.

The conveyor 4 comprises an infeed section 60, an intermediate section 61 and a discharge section 62. Each of the infeed section 60 and the discharge section 62 are foldable inwardly over the intermediate section 61 by means of rams 63, 64 at hinge joints 65, 66 between the conveyor sections 60, 61, 62. The intermediate conveyor section 61 is movable on the chassis 2 by means of the telescopic support strut 5 and the associated link arm 6 between a lowered stored position seated on a rest 68 on the chassis 2 and a raised operative position above the chassis 2 as shown in the drawings. A loading infeed hopper 69 is provided at the infeed section 60 of the conveyor 4.

In use, the mobile stockpiling conveyor 1 when in the fully folded position is readily easily manoeuvred on the tracks 3 into a desired stockpiling position. The auxiliary wheels 8 can then be lowered to provide improved stability as they extend outwardly of the tracks 3. By extending the telescopic strut 5 and the associated link arm 6 the conveyor 4 is raised into the desired operative position. With the conveyor sections 60,61,62 unfolded into the operative position shown in the drawings, the telescopic strut 5 and the associated link arm 6 can be adjusted to position the infeed section 60 and discharge section 62 of the conveyor 4 as required. The pivot mount 7 is lowered to engage the ground to provide stability at the infeed end of the conveyor 4 and to allow subsequent pivoting by means of the swivel joint 51 and operation of the auxiliary wheels 8 to swing the conveyor 4 between different stockpiling position as required.

The invention is not limited to the embodiments hereinbefore described which may be varied in both construction and detail within the scope of the appended claims.

## Claims

1. A mobile stockpiling conveyor (1), including:
a chassis (2) mounted on primary mobile support elements (3),
a conveyor (4) mounted on the chassis (2) by a telescopic support strut (5) and an associated fixed length link arm (6) which extend outwardly at opposite sides of the chassis (2), both (5, 6) extending between the chassis (2) and the conveyor (4) and being pivotally connected to both the chassis (2) and the conveyor (4),
a pivot mount (7) for pivotally supporting an infeed end of the conveyor (4), and
secondary mobile support elements (8) which are movable between a raised disengaged position on the chassis (2) and a lowered ground-engaging operating position in which the primary mobile support elements (3) are lifted clear of the ground,
**characterised in that** a telescopic pivot adjusting link (36) extends between the chassis (2) and the link arm (6), being telescopically adjustable to pivot the link arm (6) on the chassis (2).

2. The mobile stockpiling conveyor (1) as claimed in claim 1 wherein each secondary mobile support element (8) is rotatable about an axis of rotation which is substantially parallel to a longitudinal axis of the conveyor (4) when in the operating position for lateral movement of the conveyor (4).

3. The mobile stockpiling conveyor (1) as claimed in claim 1, wherein each secondary mobile support element (8) is rotatable about an axis of rotation which passes through a pivot axis of the pivot mount (7) when in the operating position.

4. The mobile stockpiling conveyor (1) as claimed in any one of the preceding claims, wherein the secondary mobile support elements (8) are mounted on a pivot arm (12, 13) on the chassis (2) for pivoting between a raised disengaged position and a lowered operating position, with actuating means (16, 17) which is operable to raise and lower the pivot arm (12, 13).

5. The mobile stockpiling conveyor (1) as claimed in claim 4 wherein each pivot arm (12, 13) has an inner end and an outer end, said inner end being pivotally mounted on the chassis (2) and at least one wheel (8) being mounted at the outer end of the arm (12, 13), an actuating ram (16, 17) being mounted between the arm (12, 13) and chassis (2) which is operable to raise and lower the pivot arm (12, 13).

6. The mobile stockpiling conveyor (1) as claimed in claim 4 or claim 5 wherein each pivot arm (12, 13) is mounted on an upstanding mounting bracket (15) on the chassis (2), the inner end of the pivot arm being pivotally mounted (14) at a lower end of the mounting bracket (15) and the ram (16, 17) extending between upper end of the mounting bracket (15) and a pivot mount (18) intermediate the inner end and an outer end of the pivot arm (12, 13).

7. The mobile stockpiling conveyor (1) as claimed in claim 5 or claim 6 wherein at least one of said wheels (8) is driven by an hydraulic motor (19).

8. The mobile stockpiling conveyor (1) as claimed in any preceding claim wherein the pivot mount (7) has a ground-engaging base (50) with a swivel joint (51) mounted thereon, said swivel joint (51) connected by fixed length rods (52) to an outer end of the link arm (6) and being pivotally connected to the link arm (6) and the swivel joint (51), and a telescopic arm (54) extending between the swivel joint (51) and an outer end of the pivot adjusting link (36) and being pivotally connected to the swivel joint (51) and the pivot adjusting link (36).

9. The mobile stockpiling conveyor (1) as claimed in any preceding claim wherein the conveyor (4) comprises a plurality of folding sections (60, 61, 62).

10. The mobile stockpiling conveyor (1) as claimed in claim 9 wherein the conveyor (4) comprises an infeed section (60), an intermediate section (61) and a discharge section (62), each of the infeed section (60) and the discharge section (62) being hingedly connected to the intermediate section (61) and foldable inwardly over the intermediate section (61).

11. The mobile stockpiling conveyor (1) as claimed in claim 10 wherein the intermediate conveyor section (61) is movable on the chassis (2) by means of the telescopic support strut (5) and the associated link arm (6) between a lowered stored position seated on a rest (68) on the chassis (2) and a raised operative position above the chassis (2).

12. The mobile stockpiling conveyor (1) as claimed in any preceding claim wherein an outer end of the telescopic support strut (5) is pivotally connected adjacent a discharge end of the intermediate section (61) of the conveyor (4) and an outer end of the link arm (6) is pivotally connected adjacent an infeed end of the intermediate section (61) of the conveyor (4).

13. The mobile stockpiling conveyor (1) as claimed in any one of claims 10 to 12, wherein conveyor folding rams (63, 64) extend between the intermediate section (61) and each of the infeed section (60) and the discharge section (62) of the conveyor (4) for folding the infeed section (60) and the discharge section (62) on the intermediate section (61).

## Patentansprüche

1. Mobiler Bevorratungsförderer (1), der Folgendes umfasst:
ein Fahrgestell (2), das auf primären mobilen Stützelementen (3) montiert ist,
einen Förderer (4), der auf dem Fahrgestell (2) durch eine Teleskopstützstrebe (5) und einen zugehörigen Verbindungsarm (6) mit fester Länge montiert ist, die sich nach außen an entgegengesetzten Seiten des Fahrgestells (2) erstrecken, wobei sich beide (5, 6) zwischen dem Fahrgestell (2) und dem Förderer (4) erstrecken und sowohl mit dem Fahrgestell (2) als auch dem Förderer (4) schwenkbar verbunden sind,
eine Schwenkbefestigung (7) zum schwenkbaren Stützen eines Beschickungsendes des Förderers (4) und
sekundäre mobile Stützelemente (8), die zwischen einer angehobenen ausgerasteten Position auf dem Fahrgestell (2) und einen abgesenkten in den Boden eingerasteten Arbeitsposition beweglich sind, bei der die primären mobilen Stützelemente (3) von dem Boden abgehoben sind,
**dadurch gekennzeichnet, dass** sich eine teleskopische Schwenkeinstellverbindung (36) zwischen dem Fahrgestell (2) und dem Verbindungsarm (6) erstreckt, die teleskopisch einstellbar ist, um den Verbindungsarm (6) auf dem Fahrgestell (2) zu schwenken.

2. Mobiler Bevorratungsförderer (1) nach Anspruch 1, wobei jedes sekundäre mobile Stützelement (8) um eine Drehachse drehbar ist, die im Wesentlichen parallel zu einer Längsachse des Förderers (4) verläuft, wenn es in der Betriebsposition für die seitliche Bewegung des Förderers (4) angeordnet ist.

3. Mobiler Bevorratungsförderer (1) nach Anspruch 1, wobei jedes sekundäre mobile Stützelement (8) um eine Drehachse drehbar ist, die durch eine Schwenkachse der Schwenkbefestigung (7) verläuft, wenn es sich in der Betriebsposition befindet.

4. Mobiler Bevorratungsförderer (1) nach einem der vorhergehenden Ansprüche, wobei die sekundären mobilen Stützelemente (8) an einem Schwenkarm (12, 13) auf dem Fahrgestell (2) montiert sind, um zwischen einer angehobenen ausgerasteten Position und einer abgesenkten Betriebsposition zu schwenken, mit einem Betätigungsmittel (16, 17), das dafür ausgelegt ist, den Schwenkarm (12, 13) anzuheben und abzusenken.

5. Mobiler Bevorratungsförderer (1) nach Anspruch 4, wobei jeder Schwenkarm (12, 13) ein inneres Ende und ein äußeres Ende aufweist, wobei das innere Ende schwenkbar an dem Fahrgestell (2) montiert ist, und mindestens ein Rad (8) an dem äußeren Ende des Arms (12, 13) montiert ist, wobei ein Betätigungsstößel (16, 17) zwischen dem Arm (12, 13) und dem Fahrgestell (2) montiert ist, der dafür ausgelegt ist, den Schwenkarm (12, 13) anzuheben und abzusenken.

6. Mobiler Bevorratungsförderer (1) nach Anspruch 4 oder Anspruch 5, wobei jeder Schwenkarm (12, 13) auf einem aufrecht stehenden Montagehalter (15) an dem Fahrgestell (2) montiert ist, wobei das innere Ende des Schwenkarms an einem unteren Ende des Montagehalters (15) schwenkbar montiert ist (14) und sich der Stößel (16, 17) zwischen dem oberen Ende des Montagehalters (15) und einer Schwenkbefestigung (18) zwischen dem inneren Ende und einem äußeren Ende des Schwenkarms (12, 13) erstreckt.

7. Mobiler Bevorratungsförderer (1) nach Anspruch 5 oder Anspruch 6, wobei mindestens eines der Räder (8) durch einen Hydraulikmotor (19) angetrieben wird.

8. Mobiler Bevorratungsförderer (1) nach einem der vorhergehenden Ansprüche, wobei die Schwenkbefestigung (7) Folgendes aufweist: eine in den Boden eingerastete Basis (50) mit einem daran montierten Drehgelenk (51), wobei das Drehgelenk (51) durch Stangen (52) mit fester Länge mit einem äußeren Ende des Verbindungsarms (6) verbunden ist und schwenkbar mit dem Verbindungsarm (6) und dem Drehgelenk (51) verbunden ist, und einen Teleskoparm (54), der sich zwischen dem Drehgelenk (51) und einem äußeren Ende der Schwenkeinstellverbindung (36) erstreckt und mit dem Drehgelenk (51) und der Schwenkeinstellverbindung (36) schwenkbar verbunden ist.

9. Mobiler Bevorratungsförderer (1) nach einem der vorhergehenden Ansprüche, wobei der Förderer (4) eine Vielzahl von Klappabschnitten (60, 61, 62) umfasst.

10. Mobiler Bevorratungsförderer (1) nach Anspruch 9, wobei der Förderer (4) einen Beschickungsabschnitt (60), einen Zwischenabschnitt (61) und einen Auslassabschnitt (62) umfasst, wobei der Beschickungsabschnitt (60) und der Auslassabschnitt (62) gelenkig mit dem Zwischenabschnitt (61) verbunden sind und über den Zwischenabschnitt (61) nach innen geklappt werden können.

11. Mobiler Bevorratungsförderer (1) nach Anspruch 10, wobei der Zwischenförderabschnitt (61) auf dem Fahrgestell (2) mit Hilfe der Teleskopstützstrebe (5) und dem zugeordneten Verbindungsarm (6) zwischen einer abgesenkten Aufbewahrungsposition, die sich auf einer Auflage (68) auf dem Fahrgestell (2) befindet, und einer angehobenen Betriebsposition über dem Fahrgestell (2) beweglich ist.

12. Mobiler Bevorratungsförderer (1) nach einem der vorhergehenden Ansprüche, wobei ein äußeres Ende der Teleskopstützstrebe (5) benachbart zu einem Auslassende des Zwischenabschnitts (61) des Förderers (4) schwenkbar verbunden ist und ein äußeres Ende des Verbindungsarms (6) benachbart zu einem Beschickungsende des Zwischenabschnitts (61) des Förderers (4) schwenkbar verbunden ist.

13. Mobiler Bevorratungsförderer (1) nach einem der vorhergehenden Ansprüche 10 bis 12, wobei sich Fördererklappstößel (63, 64) zwischen dem Zwischenabschnitt (61) und jeweils dem Beschickungsabschnitt (60) und dem Auslassabschnitt (62) des Förderers (4) erstrecken, um den Beschickungsabschnitt (60) und den Auslassabschnitt (62) auf den Zwischenabschnitt (61) zu klappen.

## Revendications

1. Un convoyeur de stockage mobile (1) comprenant :
un châssis (2) monté sur des éléments de support mobiles primaires (3),
un convoyeur (4) monté sur le châssis (2) par une entretoise de support télescopique (5) et un bras de liaison de longueur fixe associé (6) qui s'étendent vers l'extérieur aux côtés opposés du châssis (2), les deux (5, 6) s'étendant entre le châssis (2) et le convoyeur (4) et étant raccordés de manière pivotante au châssis (2) et au convoyeur (4),
un montage pivotant (7) pour supporter de manière pivotante une extrémité d'alimentation du convoyeur (4), et
des éléments de support mobiles secondaires (8) qui sont mobiles entre une position haute désengagée sur le châssis (2) et une position basse opérationnelle de contact avec le sol dans laquelle les éléments de support mobiles primaires (3) sont levés au-dessus du sol,
**caractérisé en ce qu'**une liaison télescopique de réglage de pivot (36) s'étend entre le châssis (2) et le bras de liaison (6), étant réglable de manière télescopique pour faire pivoter le bras de liaison (6) sur le châssis (2).

2. Le convoyeur de stockage mobile (1) selon la revendication 1, dans lequel chaque élément de support mobile secondaire (8) est rotatif autour d'un axe de rotation qui est sensiblement parallèle à un axe longitudinal du convoyeur (4) quand il est en position opérationnelle pour le mouvement latéral du convoyeur (4).

3. Le convoyeur de stockage mobile (1) selon la revendication 1, dans lequel chaque élément de support mobile secondaire (8) est rotatif autour d'un axe de rotation qui passe à travers un axe de pivotement du montage pivotant (7) quand il est en position opérationnelle.

4. Le convoyeur de stockage mobile (1) selon l'une quelconque des revendications précédentes, dans lequel les éléments de support mobiles secondaire (8) sont montés sur un bras pivotant (12, 13) sur le châssis (2) pour pivoter entre une position haute désengagée et une position basse opérationnelle, avec un moyen d'actionnement (16, 17) servant à lever et baisser le bras pivotant (12, 13).

5. Le convoyeur de stockage mobile (1) selon la revendication 4, dans lequel chaque bras pivotant (12, 13) possède une extrémité intérieure et une extrémité extérieure, ladite extrémité intérieure étant montée de manière à pouvoir pivoter sur le châssis (2) et au moins une roue (8) étant montée à l'extrémité extérieure du bras (12, 13), un poussoir d'actionnement (16, 17) étant monté entre le bras (12, 13) et le châssis (2) servant à lever et abaisser le bras pivotant (12, 13).

6. Le convoyeur de stockage mobile (1) selon la revendication 4 ou la revendication 5, dans lequel chaque bras pivotant (12, 13) est monté sur un support de montage vertical (15) sur le châssis (2), l'extrémité intérieure du bras pivotant étant monté de manière à pouvoir pivoter (14) à une extrémité inférieure du support de montage (15) et le poussoir (16, 17) s'étendant entre l'extrémité supérieure du support de montage (15) et un montage pivotant (18) en position intermédiaire entre l'extrémité intérieure et une extrémité extérieure du bras pivotant (12, 13).

7. Le convoyeur de stockage mobile (1) selon la revendication 5 ou la revendication 6, dans lequel au moins une desdites roues (8) est entraînée par un moteur hydraulique (19).

8. Le convoyeur de stockage mobile (1) selon l'une quelconque des revendications précédentes, dans lequel le montage pivotant (7) possède une base de contact avec le sol (50) dotée d'un joint articulé (51) monté sur celle-ci, ledit joint articulé (51) étant raccordé par des tiges de longueur fixe (52) à une extrémité extérieure du bras de liaison (6) et étant raccordé de manière à pouvoir pivoter sur le bras de liaison (6) et le joint articulé (51), et un bras télescopique (54) s'étendant entre le joint articulé (51) et une extrémité extérieure de la liaison de réglage de pivot (36) et étant raccordé de manière à pouvoir pivoter sur le joint articulé (51) et la liaison de réglage de pivot (36).

9. Le convoyeur de stockage mobile (1) selon l'une quelconque des revendications précédentes, dans lequel le convoyeur (4) comprend une pluralité de sections pliantes (60,61,62).

10. Le convoyeur de stockage mobile (1) selon la revendication 9, dans lequel le convoyeur (4) comprend une section d'entrée (60), une section intermédiaire (61) et une section de décharge (62), chacune de la section d'entrée (60) et de la section de décharge (62) étant raccordée par charnière à la section intermédiaire (61) et pouvant se plier vers l'intérieur par-dessus la section intermédiaire (61).

11. Le convoyeur de stockage mobile (1) selon la revendication 10, dans lequel la section intermédiaire (61) du convoyeur est mobile sur le châssis (2) par le moyen de l'entretoise de support télescopique (5) et le bras de liaison associé (6) entre une position de stockage abaissée placée sur un socle (68) sur le châssis (2) et une position opérationnelle élevée au-dessus du châssis (2).

12. Le convoyeur de stockage mobile (1) selon l'une quelconque des revendications précédentes, dans lequel une extrémité extérieure de l'entretoise de support télescopique (5) est raccordée de manière à pouvoir pivoter en position adjacente à une extrémité de décharge de la section intermédiaire (61) du convoyeur (4) et une extrémité extérieure du bras de liaison (6) est raccordée de manière à pouvoir pivoter en position adjacente à une extrémité d'entrée de la section intermédiaire (61) du convoyeur (4).

13. Le convoyeur de stockage mobile (1) selon l'une quelconque des revendications 10 à 12, dans lequel les poussoirs pliants (63, 64) du convoyeur s'étendent entre la section intermédiaire (61) et chacune de la section d'entrée (60) et la section de décharge (62) du convoyeur (4) pour plier la section d'entrée (60) et la section de décharge (62) sur la section intermédiaire (61).
